# EUROPEAN PATENT SPECIFICATION

(11) **EP 4 153 472 B1**
(45) Date of publication and mention of the grant of the patent: **16.07.2025**
(21) Application number: 21732589.3
(22) Date of filing: 18.05.2021
(51) Int. Cl.: B63B 1/28, B63B 1/26, B63B 1/10, B63B 1/14, B63C 13/00, B63B 1/24

(54) **HULL WITH VARIABLE GEOMETRY**
RUMPF MIT VARIABLER GEOMETRIE
COQUE À GÉOMÉTRIE VARIABLE

(30) Priority: 21.05.2020 IT 202000011980; 25.09.2020 IT 202000022675
(43) Date of publication of application: 29.03.2023
(73) Proprietor: Verme Projects S.r.l., 16033 Lavagna (IT); Verme, Massimo, 16033 Lavagna (IT)
(72) Inventor: ROSSI, Roberto, 17019 VARAZZE (IT); VERME, Massimo, 16033 LAVAGNA (IT)
(74) Representative: Bottino, Giovanni
(86) International application number: PCT/IT2021/050147
(87) International publication number: WO 2021/234748

(56) References cited:
- EP-A1- 0 648 668
- JP-A- S51 143 288
- US-A- 2 491 744
- US-A- 4 452 166
- US-A1- 2003 089 293
- US-A1- 2004 134 402

## Description

### FIELD OF THE INVENTION

The present invention concerns a hull with variable geometry which can be used advantageously, in particular, in small vessels operating in canals or lagoon waters for private service and as taxis.

### BACKGROUND OF THE INVENTION

It is known that hulls equipped with wing surfaces such as for example hydrofoils or suchlike can be used in various mission profiles, or for various types of uses.

One of these uses is, for example, the so-called "water taxi", or, as can be understood, the transport of people along water basins, for example along city canals, port areas or other bodies of water, but also in open waters.

The vessels used for this type of use therefore need to: travel inside some protected zones at the maximum possible speed compatible with a reduced wave formation, which requirement is proving to be increasingly stringent; travel at high speeds once they are in open water, with good stability and low motion sickness index for passengers; be as efficient as possible from the point of view of resistance, given the continuous use of the vehicle and the resulting energy and economic savings; have a reduced draft if necessary.

As is known, there are different types of hulls and in particular naval bottoms that differ from each other in the type of support, which can be of the hydrostatic type, due to the thrust of the immersed volume of the bottom, or of the hydrodynamic type, due to the lift of the bottom surface that glides over the water.

"Traditional" vessels in principle are divided into displacement vessels, which primarily exploit the hydrostatic thrust, and planing vessels, which exploit hydrodynamic lift. The resistance of the former is strongly linked to the waterline length. It gradually increases with speed up to a critical speed which is a function of said length, and then increases greatly, making any increase in power in order to significantly increase speed inefficient and uneconomical. The incidence of displacement is not very significant. In the case of a water taxi or a small vessel, the length is usually limited and therefore the critical speed is very low, for example a few knots, and therefore, however efficient in terms of resistance/weight ratio, the displacement bottom cannot be adopted for small vessels where an operating speed usually higher than the critical displacement speed is required.

On the contrary, for planing bottoms in all their forms, resistance is strongly linked to displacement. In these cases, lightness is fundamental to drastically reduce consumption. However, both have the disadvantage of consistent wave formation and sensitivity to wave motion.

One solution that could be adopted to reduce sensitivity to wave motion and resistance is the S.W.A.T.H. type vessel, that is, one that uses a S.W.A.T.H. type hull. In one of its most common configurations, the hydrostatic support is provided by two completely submerged bodies, similar to torpedoes, connected to the main vessel, which is completely out of the water, by means of vertical supports having a section that is as thin as possible. Since the vertical supports have thin sections, the resistance to their forward motion is small, as is the wave formation. For the same reason, the condition of the sea does not affect the motions of the main vessel, which is almost transparent to the passage of a wave.

The disadvantages are the great draft, the limited ability to withstand load variations, often compensated with ballast tanks, and therefore an unnecessary weight increase.

The S.W.A.T.H. has found limited use in pilot vessels, research laboratories, clinic vessels. However, from the point of view of resistance, in the light of the most recent developments in the state of the art, the S.W.A.T.H. is not a particularly efficient hull.

Another type of bottom for high speeds is the hydrofoil, in which the hydrodynamic support is obtained by means of wing surfaces called wings or hydrofoils or foils, completely or partly submerged, which at a speed higher than the take-off speed, lift the vessel completely out of the water. The advantages are the reduced resistance to forward motion, essentially due to the drag/lift ratio of the wings and the vertical supports that connect them to the vessel. This ratio for high speeds, higher than the minimum glide speeds of a planing bottom, is decidedly lower with respect to the latter type of bottom.

The disadvantages of this solution are related to the minimum speed necessary to keep the hydrofoil in flight, which can only be maintained for a limited time in the operating profile of a water taxi, for example. Once it has descended to low speeds, the hydrofoil, or hull with wings, behaves worse from the point of view of resistance and seakeeping than the hull without wings, since the resistance of the wings is added to that of the bottom.

Another disadvantage of this vehicle is often the limited excursion of the load capacity, since for large displacement excursions the wings would become too loaded and would begin to lose efficiency, not allowing the flight of a hydrofoil that was too heavy.

Another disadvantage is the excessive draft when the vessel is stationary, which reduces access to some ports.

Despite innumerable attempts and variations in hull shapes, the only solution to reduce consumption would be to reduce speeds, but by using bottoms optimized for those lower speeds, specifically those displacement speeds where the resistance/weight ratio is significantly low and lower even than that of a wing profile.

With regard to navigability in protected zones, such as for example channels that lead to the open sea, it should be noted that there is a change: where in the past the limit was a reduced maximum speed, in some cases today a reduced wave formation is required irrespective of the speed, which could be higher for certain particular bottoms. Although the hydrofoil with submerged wings has a very low wave formation in flight conditions, its navigation could still be limited by the take-off step. In fact, before taking off, the hydrofoil has to reach high speeds in displacement conditions and then navigate, although limited in time, with high wave formation.

In the vessel produced by Rodriguez Cantieri Navali called commercially and perhaps improperly "ALI-SWATH.", (it is not a SWATH as there is no double hull), a single submerged body, thanks to its hydrostatic thrust and together with the hydrodynamic support of wing surfaces, supports the vessel in navigation above the surface of the sea, to which it is connected by a very thin vertical structure.

This type of bottom therefore combines the advantages of a submerged-body bottom with the advantages of a hydrofoil. These advantages are above all related to the reduced wave resistance, the low wave formation, the high platform stability due to the reduced effect of the condition of the sea on the movements of the vessel, and finally the possibility of taking off even at low speeds as a function of the fact that the component of hydrodynamic support due to the wings is a small part compared to the hydrostatic component due to the presence of the submerged body.

These aspects make the use of a similar bottom particularly interesting in various applications, in particular, for example, for water taxis operating in canals and lagoon waters.

However, the main disadvantage of this type of solution is that when the vessel is stationary or at low speed when maneuvering, since the hydrodynamic thrust of the wing surfaces is lacking, the hull of the vessel descends into the water until its hydrostatic thrust compensates for the loss of lift of the wing surfaces. This considerably increases the draft and has severely limited its diffusion until today.

There is therefore a need to perfect a hull with variable geometry which can overcome at least one of the disadvantages of the state of the art.

In particular, one purpose of the present invention is to provide a hull with variable geometry which allows to overcome the problems of high draft typical of some known solutions, which allows to obtain a reduced wave formation and which also has a reduced resistance to forward motion.

Another purpose of the present invention is to provide a hull with variable geometry which can be used substantially on any type of vessel, in particular in vessels such as hydrofoils, "Aliswath" or suchlike, which can be used by way of example but not exclusively as water taxis.

The Applicant has devised, tested and embodied the present invention to overcome the shortcomings of the state of the art and to obtain these and other purposes and advantages.

Documents US 2003/089293 A1, US 4 452 166 A, US 2 491 744 A, EP 0 648 668 A1, JP S51 143288 A and US 2004/134402 A1 constitute further relevant prior art.

### SUMMARY OF THE INVENTION

The present invention is set forth and characterized in the independent claim. The dependent claims describe other characteristics of the present invention or variants to the main inventive idea.

In accordance with the above purposes and according to the present invention, a hull with variable geometry for a vessel comprises one or more parts, preferably torpedo-shaped, completely immersed, configured to provide part of the buoyancy thrust and integral with an emerged part, or topside of the hull, by means of one or more uprights, and one or more immersed wing surfaces, which, in a situation in which the vessel travels at a sufficiently high speed, are configured to provide the remaining part of the vertical thrust required to keep the vessel above the surface of the water at a predetermined height.

The present hull also comprises one or more supports connected to the wing surfaces and associated with floating elements, mobile with respect to the completely immersed part; the floating elements are fixed to the supports or mobile with respect to the supports, therefore the floating elements are thus substantially cooperating with the completely immersed part and with the wing surfaces; the wing surfaces are configured to move with respect to the completely immersed part or to remain fixed with respect to it and to the elements.

In particular, the floats are configured to increase their immersion as the speed of the vessel decreases and therefore provide the vertical thrust to maintain or adjust the distance of the vessel from the water, in a manner that is optimal and functional for the use of the vessel even at reduced speeds or when the vessel is stationary.

Therefore, advantageously, the present hull with variable geometry allows to overcome the problems of high draft typical of some known solutions, in order to obtain a reduced wave formation, and also has a reduced resistance to forward motion.

The present hull is therefore able to reduce the draft, or in any case maintain a predetermined height with respect to the waterline in order to allow the operations of embarking and disembarking passengers, with the vessel stationary or maneuvering, by modifying its geometry, in a short time and with simple operations performed safely.

The hull can therefore substantially consist of a pair of watertight volumes, or floating elements, hull-shaped, at low speed partly immersed in the water located at the ends of the wing surfaces connected to a central torpedo-shaped body, the latter connected to an immersed body by means of a thin vertical structure. A mechanism or system for moving the wing surfaces can be provided, the system moving the latter by modifying the position of the watertight volumes located at the ends of the wing surfaces. In particular, the movement of the wing surfaces modifies the relative position between the hull-shaped watertight volumes at the ends of the wing surfaces and the immersed body, thus modifying its draft.

The movement of the wing surfaces and of the floating bodies can be achieved with different systems depending on the situation. Telescopic or hinged movement systems can be used. Mechanisms with manual, hydraulic, mechanical or pneumatic movement can be used. Another immediate advantage achieved from adopting this hull with variable geometry is being able to modify the load capacity when the vessel is stationary, while maintaining the same height of the part of the vessel outside the surface of the sea, with respect to the waterline. In fact, when the vessel is stationary, hydrostatic support is given by the immersed body and by the portion of immersed volume of the watertight volumes located at the ends of the wing surfaces. As the load increases, by moving the wing surfaces and immersing the floating elements or watertight volumes more, the height of the vessel with respect to the waterline does not change. Obviously, this allows to adjust the height of the vessel with respect to the height of a boarding dock, and to maintain this height constant during all boarding operations. Furthermore, due to the fact that it is the immersed portion of the watertight volumes that determines the height of the vessel, the draft thereof can be kept within the limits required to land at the dock even in the case of shallow waters.

Furthermore, by immersing one or the other of the watertight volumes located at the ends of the wings, any unevenness of the load can be compensated without using ballast boxes, and therefore unnecessarily increasing the weight of the vessel.

Another advantage of the hull of the present invention consists in the fact that the take-off, that is, the transition between hydrostatic support of the watertight volumes and hydrodynamic support of the wing surfaces, occurs practically without a variation in the height of the vessel.

During the acceleration phase of the vessel, the partly immersed watertight volumes not only contribute to the hydrostatic support, but also contribute to the transverse stability of the vessel, also acting as a system for stabilizing against vessel motions. The shape of the watertight volumes can be optimized as if they were real hulls in order to reduce hull resistance to these speeds.

When the speed is such that the wing surfaces are able to compensate for the hydrostatic thrust of the watertight volumes, the movement mechanism moves the wing surfaces to which they are connected, until they are completely taken out of the water. In these conditions, the vessel is completely supported by the immersed volume and by the lift of the wing surfaces.

From this moment, the dynamic behavior of the vessel is that of the Rodriguez "Aliswath" project, that is, a vessel for which it is possible to have a high load capacity by virtue of the high buoyancy thrust of the immersed body, a high platform stability, a reduced resistance to forward motion and a reduced wave formation, by virtue of the reduced waterline section of the vertical structure of the immersed body and of the wing surfaces.

During the flight phase, the stability against vessel motions is provided by the presence of the wing surfaces which, by moving controlled by an automatic system, react to a change in trim by modifying its lift. In order to control vessel motions, the wing surfaces can be equipped with independent flaps to control and adjust the trim.

Finally, the immersed bodies can be taken into contact with the emerged part of the vessel by transmitting to them a part portion of vertical thrust, and unloading the central structure. In this way, the wing surfaces are loaded in a more balanced manner, like a beam on two supports instead of a beam wedged on one side only, reducing the dynamic stresses to which the wing surfaces are subjected during the flight phase, and increasing their resistance to fatigue and the average life of the structure.

With regards to the navigability in protected zones with stringent requirements regarding wave formation, at low speeds when the vessel is in hydrostatic support on the immersed bodies and on the partly immersed floating elements, the wave formation would in any case be limited, like that of a traditional multi-hull: as for example a catamaran or a trimaran. The floating elements could have very narrow and streamlined sections, while the connection between the immersed body and the vessel, which itself has a very narrow section, could be conveniently designed in its upper connection to the topside so as to assume the shape of the central hull of a trimaran.

This geometry would therefore allow the invention to reach take-off speed with reduced wave formation, and continue navigation on the wings, lifting the floating elements, with further reduced wave formation, but at high speeds, even in zones where the speed of other vessels would be limited due to high wave formation. This characteristic would make the invention even more advantageous compared to a hydrofoil with immersed wings which would still have to cross the displacement zone and at low speeds, in order to then be able to take off once it reaches open sea.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic lateral view of one embodiment of the present hull with variable geometry, in particular with the wing surfaces or wings in the position in which the watertight bodies or volumes disposed at their ends are completely emersed, a position in which the hydrodynamic support of the wings allows the flight of the vessel on which it is applied;
- fig. 2 is a lateral view of the hull of fig. 1;
- fig. 3 is a schematic cross-section view of the hull in the configuration of fig. 1 and fig. 2;
- fig. 4 is a schematic cross-section view of the hull of the previous drawings, in which the watertight volumes at the ends of the wing surfaces are partly immersed, a position in which the hydrostatic support of these volumes compensates for the hydrodynamic thrust of the wings and keeps the vessel at flight altitude despite it being stationary or maneuvering at low speed;
- fig. 5 is a schematic cross-section view of a hull with variable geometry according to another embodiment of the invention and with the watertight volumes, or floating elements, in a first raised position;
- fig. 6 is a schematic cross-section view of the hull of fig. 5 with the watertight volumes in a second lowered position;
- fig. 7 is a schematic three-dimensional view of another embodiment of the present hull with variable geometry with the watertight volumes in a first raised position;
- fig. 8 is a schematic plan view of the hull of fig. 7;
- fig. 9 is a rear schematic view of the hull of fig. 7 and fig. 8;
- fig. 10 is a schematic three-dimensional view of the embodiment of the present hull of fig. 7 with the watertight volumes in a second lowered position;
- fig. 11 is a schematic plan view of the hull of fig. 10;
- fig. 12 is a schematic front view of the hull of fig. 10 and fig. 11;
- fig. 13 is a schematic lateral view of a variant of the embodiment of the hull of fig. 7;
- fig. 14 is a schematic section view on a larger scale of a zone of the hull of fig. 13;
- fig. 15 is a front view of the hull of fig. 13;
- fig. 16 is a schematic lateral view of another variant of the embodiment of the hull of fig. 7;
- fig. 17 is a rear view of the hull of fig. 16.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the possible embodiments of the invention, of which one or more non-limiting examples are shown in the attached drawings. The phraseology and terminology used here is also for the purposes of providing non-limiting examples.

With reference to the attached drawings, figs. from 1 to 4 show a vessel 11 comprising a hull 10a with variable geometry according to a first embodiment of the present invention.

The hull 10a comprises a completely immersed part 12, configured to provide part of the buoyancy thrust and integral with an emerged part 13 of the hull 10a by means of one or more uprights 14, and one or more immersed wing surfaces 15, which, in a situation in which the vessel 11 travels at a sufficiently high speed, are configured to provide the remaining part of the vertical thrust required to keep the vessel 11 above the surface of the water at a predetermined height.

The completely immersed part 12 can be a torpedo-shaped element, or a wing profile or a set of wing profiles, a support structure or other.

The hull 10a comprises one or more supports 16a connected to the wing surfaces 15 and associated with floating elements 17a mobile with respect to the completely immersed part 12. The floating elements 17a are fixed to the supports 16a or mobile with respect to the supports 16a. The floating elements 16a are therefore substantially cooperating with the completely immersed part 12 and with the wing surfaces 15. The wing surfaces 15 are configured to move with respect to the completely immersed part 12 or remain fixed with respect thereto, and the mobile floating elements 16a are configured to increase their immersion as the speed of the vessel 11 decreases and therefore provide the vertical thrust to maintain or adjust the distance of the vessel 11 from the water in a manner that is optimal and functional for the use of the vessel 11, even at reduced speeds or when the vessel 11 is stationary.

The completely immersed part 12 generates only a part of the total hydrostatic thrust required to maintain the weight of the vessel 11. This part 12 is connected to the vessel by means of the one or more uprights 14 having a very thin section that pass through the surface of the sea. There is also at least one pair of the wing surfaces 15 each connected by means of a hinge 30 to the immersed part 12.

It is also possible to provide that the wing surfaces 15 are joined to the part 12 by means of two hinges, a longitudinal one, that is, the hinge 30, to vary the height, and a horizontal or transverse one, to vary the angle of incidence of the wing surfaces 15 or the longitudinal trim of the floating elements 17a in the vertical plane in order to modify the trim angle of the vessel.

The junction between the wing surfaces 15 and the immersed part 12 can also consist of two hinges, a longitudinal one, that is, the hinge 30, to vary the height, and a vertical one, to vary the angle of incidence of the wing surfaces 15 or the longitudinal trim of the floating elements 17a in the horizontal plane in order to modify the direction of the vessel.

In other embodiments, the junction between the wing surfaces 15 and the completely immersed part 12 can consist of a sliding block which by sliding varies the height of the floating elements 17a at the end of the load-bearing surfaces.

The uprights 14 could also be of the telescopic and adjustable type, in order to increase or decrease the distance of the assembly consisting of immersed part 12, wing surfaces 15 and floating elements 17a, from the emerged part 13, as a function of what is convenient for navigation.

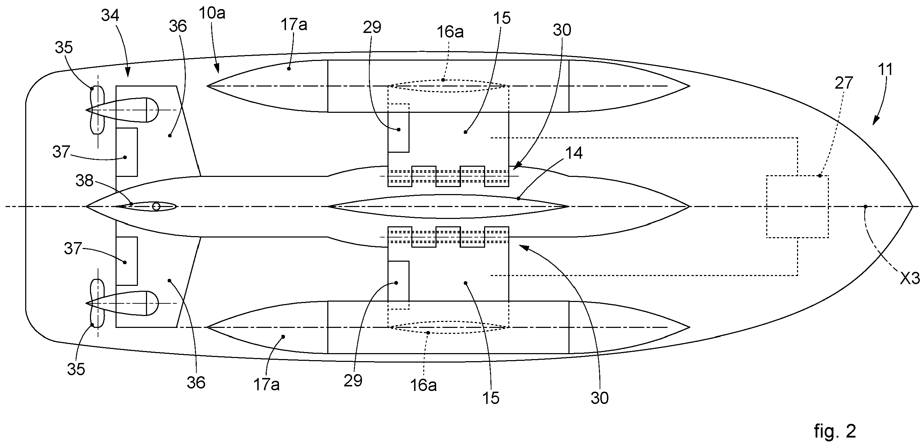

The wing surfaces 15 are preferably located in pairs in a symmetrical position at the sides of the torpedo-shaped hull. The wing surfaces 15 are characterized by a load-bearing wing profile, that is, provided with a curvature with respect to a joining straight line X2 that passes through the entry edge and the exit edge of the wing surfaces. This profile is also positioned so that the straight line X2 as above has an angle α1 with respect to the incident flow, and is equipped with a flap that moves, varying the angle β1 between the straight line as above and the line joining the entry edge and the exit edge of a flap 29 which the wing surface 15 can be equipped with, see also fig. 2.

The curved profile and the fixed angle of incidence α1 generate a constant lift, while by varying the angle of the flap β1 it is possible to vary the lift in order to modify the trim of the vessel in flight. Once the take-off speed has been reached and exceeded, the wing surfaces 15 generate a hydrodynamic thrust, which together with the hydrostatic thrust of the part 12 are able to maintain the weight of the vessel 11. The pair of floating elements 17a located at the ends of the wing surfaces 15, due to the relative movement of the latter with respect to the immersed part 12, can be partly immersed or completely out of the water. With the vessel stationary, when the wing surfaces 15 do not generate lift, the portion of floating element 17a that is immersed generates a hydrostatic thrust capable of supporting, together with the hydrostatic thrust of the immersed part 12, the weight of the vessel.

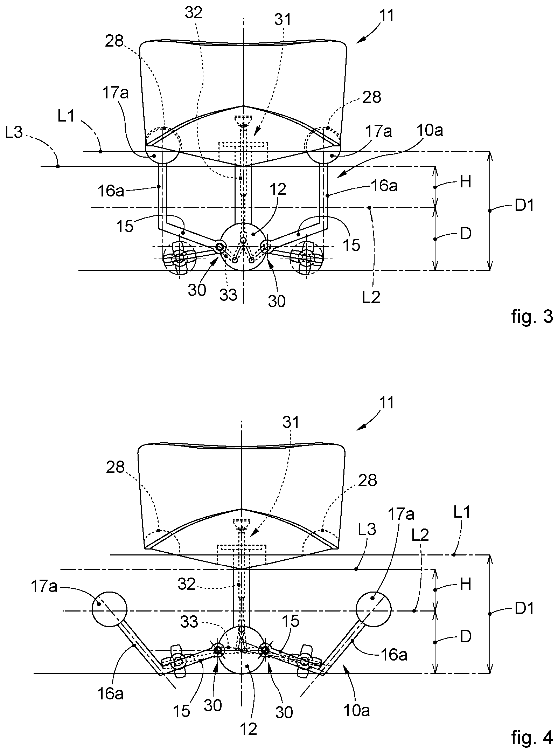

The wing surfaces 15 and the floating elements 17a can be moved with respect to the completely immersed part 12 by means of the hinges 30, see also fig. 3 and fig. 4. These hinges 30 allow the transition movement of the floating elements 17a from partly immersed to totally above the sea surface.

In order to pass from the position of fig. 3 to the position of fig. 4 and vice versa, the present hull 10a is equipped with rotation means 31 configured to allow the wing surfaces 15 to rotate around the hinges 30 away from or toward the hull 10a. Such rotation means 31 comprise for example a hydraulic actuator 32 and a lever mechanism 33 which allows the correct movement of the wing surfaces 15 and therefore the correct opening or closing of the floating elements 17a.

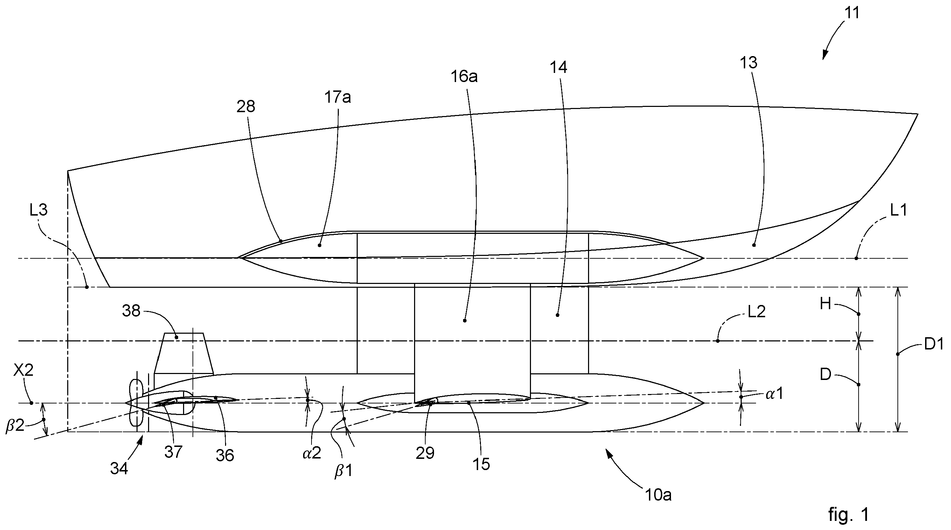

The hull 10a will also be equipped with a propulsion system 34, for example provided with a pair of propellers 35 mounted on wing surfaces 36, which can be equipped with flaps 37, see again fig. 1 and fig. 2. In addition, the completely immersed part 12 can be equipped with a direction control system, in this case a rudder 38.

When the vessel is stationary or maneuvering at low speed, it is the two propellers 35 located at a certain distance from the centerline axis X3 of the vessel which, by rotating in an opposite sense, allow the vessel to turn on itself. In order to improve the maneuverability of the vessel, a transverse maneuvering propeller could be installed in the bow of the immersed part 12, or the propellers, including the bow one, could be located in special thrusters capable of rotating around a vertical axis.

The wing surfaces 36 help to control the trim of the vessel in flight. In this regard, α2 indicates the angle of incidence of the wing surface 36, while β2 indicates the angle of incidence of the flap 37 of the independent wing.

The wing surfaces 15, in the position of fig. 3, can take the floating elements 17a into contact with the vessel 11, transmitting to it part of the vertical and horizontal thrusts caused by the actions of the sea and therefore reducing the structural stresses on the uprights 14. In particular, the floating elements 17a could be housed in seatings 28 made on the bottom of the vessel 11.

The wing surfaces 15, as a function of their relative position with respect to the part 12, in addition to the possible variation of immersion of the floating elements 17a, vary their surface or the angle of incidence, or by means of the flap 29 they vary their profile, consequently they vary the lift in order to control and reduce vessel motions in all operating conditions of the vessel 11: stationary vessel, take-off and flight, what stated above is in combination with the hydrostatic and hydrodynamic thrust of the part 12 and possibly of the wing surfaces 36, fixed or mobile, but independent from the wing surfaces 15 associated with the floating elements 17a.

Fig. 2 therefore shows a top view of the immersed part 12, for example torpedo-shaped, and of the wing surfaces 15 and 36. In particular, it can be seen that a portion of the wing surface is dedicated to the flaps 29 and 37, which increase or reduce the lift in order to adjust the trim and reduce vessel motions in conditions of flight by modifying the angles of incidence β1 and β2, see also fig. 1.

Fig. 1 also ideally shows the waterline line L1 of the vessel during deployment operations, that is, with the floating elements 17a immersed and the line L2 representing the surface of the water when the vessel 11 is in flight. L3 indicates the baseline of the vessel 11.

With the vessel stationary or maneuvering, see fig. 1, the floating elements 17a are partly immersed and keep the vessel at a predetermined height H, equal to that of flight, without modifying the immersion D. Without immersed floating elements 17a, the immersion of the vessel would increase up to the height D1 making it impossible to dock in many unequipped landings. In addition, the movement of the floating elements 17a when the vessel is stationary counteracts the vessel motions, keeping the vessel stable despite a rough sea state.

In the transition phase, the part portion of vertical thrust not provided by the immersed part 12 is compensated partly by the hydrostatic thrust of the partly immersed floating elements 17a and partly by the hydrodynamic lift of the wing surfaces 15, and the floating elements 17a behave like real hulls and for this reason their shape has to be optimized in order to reduce wave resistance and wave formation. The floating elements 17a can for example be torpedo-shaped, as shown.

Figs. from 5 to 6 show another embodiment of the present hull 10b in which the wing surfaces 15 are fixed and the floating elements 17b are moved by means of supports 16b in the form of cables, which pass inside and outside the one or more uprights 14. These cables are associated with a movement system 40 thereof, which allows to raise and lower the floating elements 17b, therefore their passage from the emerged position to the immersed position, or vice versa, in addition to stiffening the structure of the hull 10b.

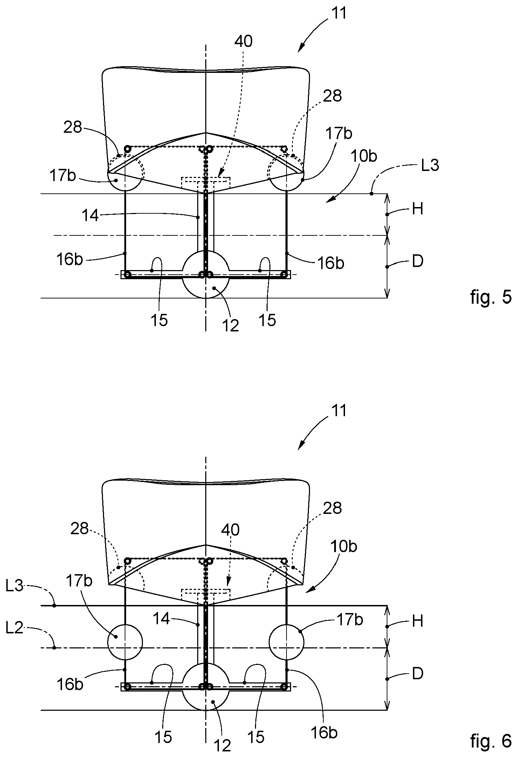

In fig. 5 the floating elements 17b are in the raised position while in fig. 6 they are shown in a lowered position.

These cables are inside and outside the upright 14 and substantially connect the completely immersed part 12 to the vessel 11. The upright 14, cables and vessel 11 assembly substantially constitutes a closed-loop tensile structure which reduces the structural stresses on the upright 14, or on the uprights if there is more than one.

The floating elements 17b can each slide on two cables, at the stern and at the bow thereof, giving the floating elements 17b the possibility of being disposed with an adjustable trim during their phase of descent into the water.

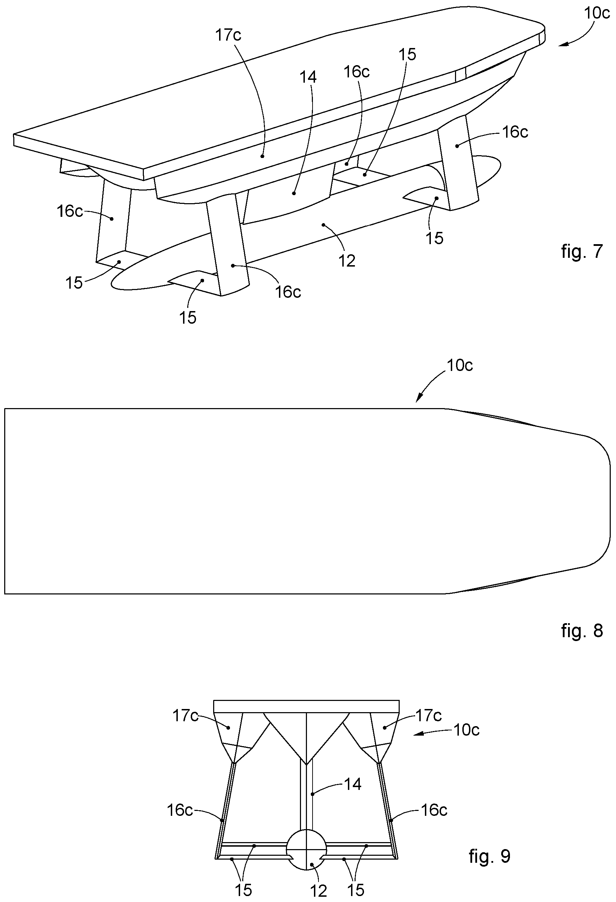

In the configuration of fig. 7, the hull 10c comprises rigid supports 16c along which the floating elements 17c can slide. The supports 16c can be cables under tension that form a tensile structure, together with the one or more compressed uprights 14, or wing profiles as shown in the drawing, or other.

It is possible to provide on each side of the hull 10c at least one pair of supports 16c along which the floating elements 17c are positioned.

The supports 16c are connected on one side to the wing surfaces 15 and on the other side to a lower part of the hull 10c.

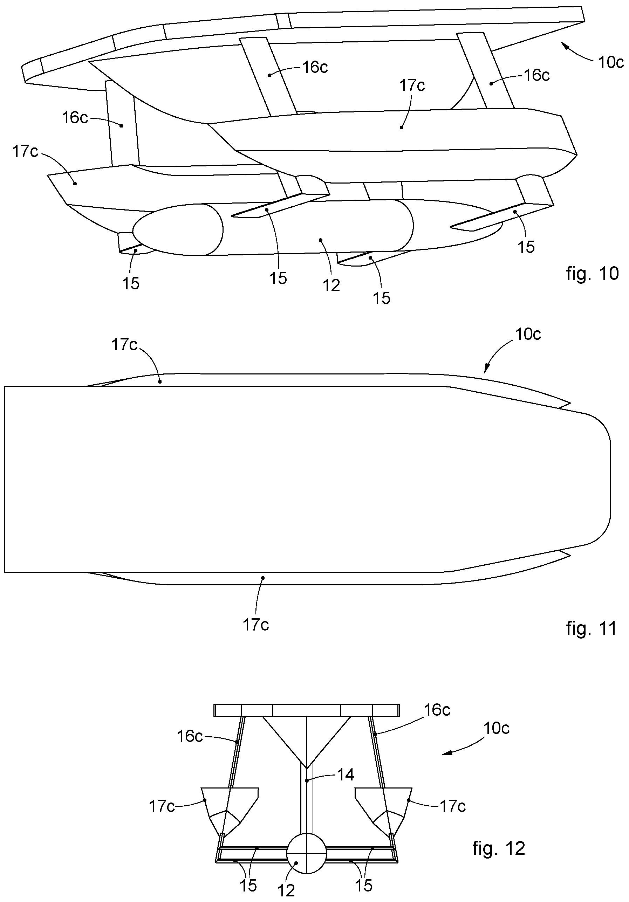

The supports 16c are also directed substantially in a vertical or slightly inclined direction, see fig. 9, in particular inclined toward the inside of the hull 10c. This allows greater opening in the lowered position of fig. 10 and a smaller overall size in the raised position of fig. 7. In particular, see fig. 8, in the raised position the floating elements 17c are substantially retracted under the hull 10c.

The wing surfaces 15 are connected to the completely immersed part 12 of the hull 10c.

The supports 16c can be for example thin rigid rods, or profiles with another shape, for example rounded, elliptical or other. It is possible to provide drive systems able to raise or lower the floating elements 17c with respect to the supports 16c, for example actuators associated on one side with the floating element 17c and on the other side with the hull 10c, or other.

Furthermore, in some embodiments, the floating elements 17c can be substantially V-shaped, as shown by way of example.

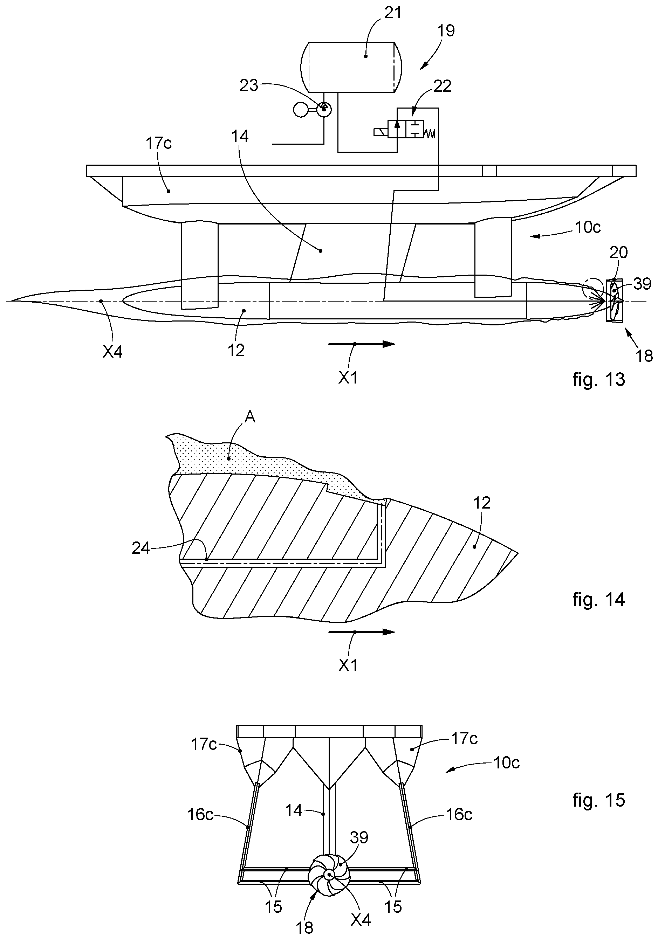

The hull 10c, see fig. 13 and 15, can be equipped with a propulsion system 18 located at the front end of the completely immersed part 12, for example a torpedo-shaped body. The direction of travel X1 of the hull is indicated in fig. 13.

This completely immersed part 12 of the hull can also be used as a tank for the fuel required for the front propulsion system 18 or other propulsion system.

The propulsion system 18 can be provided, for example, with a propeller 39 rotating around an axis X4 and protected by means of a shell 20.

The hull 10c can also be equipped with a delivery system 19 configured to deliver compressed air A onto the surface of the completely immersed part 12, in order to further decrease the resistance to the forward motion of the vessel 11, that is, in the direction X1, see also fig. 14.

The system 19 can be equipped with a tank 21 for storing compressed air associated with a compressor 23 which, by means of a distributor valve 22, delivers compressed air A onto the surface of the part 12 through one or more channels 24 made in the part 12.

The system 19 can be housed in any convenient position whatsoever of the vessel 11, of the hull 10 or even inside the completely immersed part 12.

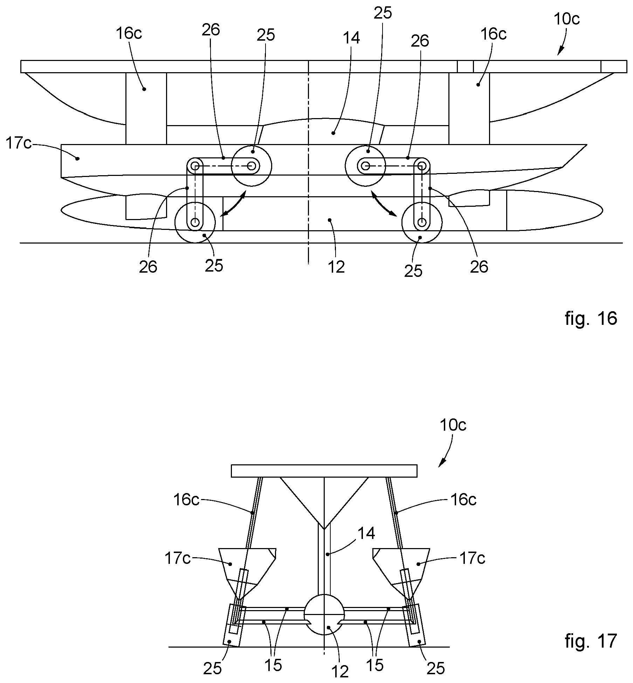

The present hull 10c, see fig. 16 and 17, can also be equipped with wheels 25 that can be extracted, when necessary, from the floating elements 17c in order to make the hull 10c and therefore the vessel 11 self-propelled, for example for their transport along docks or other.

It is possible to provide at least one pair of wheels 25 for each floating element 17c. These wheels 25, which preferably will be idle, can be pivoted inside the floating element 17c by means of suitable supports 26 which, by means of manual rotation or a rotation automatically commanded by the vessel 11, can pass from a substantially horizontal configuration in which they are housed inside the floating element 17c, to a substantially vertical configuration for moving the vessel 11 on land.

The present hull, see for example the hull 10a fig. 2, can comprise a control system 27 equipped with inertial sensors and height detectors, which is configured to manage the movement of the wing surfaces for the active control of vessel motions in the two main conditions of use, that is, when maneuvering by exploiting the increase or reduction of immersed volume of the floating elements, and in flight at cruising speed by varying the lift of the wing surfaces.

We wish to clarify that the characteristics described and shown with reference to a determinate embodiment of the hull can also be conveniently incorporated in the other embodiments of the hull described and shown.

It is clear that modifications and/or additions of parts may be made to the hull with variable geometry as described heretofore, without departing from the field and scope of the present invention as defined by the claims.

In the following claims, the sole purpose of the references in brackets is to facilitate reading: they must not be considered as restrictive factors with regard to the field of protection claimed in the specific claims.

## Claims

1. Hull with variable geometry for a vessel (11), comprising one or more completely immersed parts (12), which are configured to provide part of the buoyancy thrust and are integral with an emerged part (13) of the hull by means of one or more uprights (14), and one or more immersed wing surfaces (15), which, in a situation in which the vessel travels at a sufficiently high speed, are configured to provide the remaining part of the vertical thrust required to keep the vessel (11) above the surface of the water at a predetermined height, wherein the hull comprises one or more supports (16a, 16b, 16c) connected to the wing surfaces (15) and associated with floating elements (17a, 17b, 17c) which are mobile with respect to said completely immersed part (12), said floating elements (17a, 17b, 17c) being fixed to said supports (16a, 16b, 16c) or mobile with respect to said supports (16a, 16b, 16c), said floating elements (17a, 17b, 17c) thus being substantially cooperating with said completely immersed part (12) and with said wing surfaces (15), said floating elements (17a, 17b, 17c) being connected to said completely immersed part (12) through said wing surfaces (15), said wing surfaces (15) being configured to move with respect to said completely immersed part (12) or to remain fixed with respect thereto and said floating elements (17a, 17b, 17c) being configured to increase their immersion as the speed of the vessel decreases, and therefore provide the vertical thrust to maintain or adjust the distance of the vessel from the water in a manner that is optimal and functional for the use of the vessel even at reduced speeds or when the vessel is stationary.

2. Hull as in claim 1, **characterized in that** it comprises other wing surfaces (36), fixed or mobile, independent of said wing surfaces (15) and which contribute to controlling the trim of the hull of the vessel in flight.

3. Hull as in claim 1 or 2, **characterized in that** said wing surfaces (15) are connected to said completely immersed part (12) by means of hinges (30) and rotation means (31) configured to allow said wing surfaces (15) to rotate around said hinges (30) with a movement that takes them away from or toward said hull.

4. Hull as in any claim hereinbefore, **characterized in that** said floating elements (17b) are associated with one or more supports (16b) which have the form of one or more cables positioned inside and outside said one or more uprights (14), said one or more cables, said one or more uprights (14) and said hull substantially constituting a tensile structure which reduces the structural stresses on said one or more uprights (14).

5. Hull as in any one of the previous claims from 1 to 3, **characterized in that** said floating elements (17c) are mobile along rigid supports (16c) positioned outside said one or more uprights (14).

6. Hull as in any claim hereinbefore, **characterized in that** it comprises a propulsion system (18) which is frontal with respect to the direction (XI) of travel of the vessel.

7. Hull as in any claim hereinbefore, **characterized in that** it comprises a system (19) for delivering compressed air onto the external surface of the completely immersed part (12).

8. Hull as in any claim hereinbefore, **characterized in that** it comprises wheels (25) positioned inside said floating elements (17c) and removable, if necessary, in order to make the hull movable on land.

9. Hull as in any claim hereinbefore, **characterized in that** the completely immersed part (12) is a torpedo-shaped volume having the function of a tank for the fuel of the vessel and/or for batteries and/or fuel cells.

10. Hull as in any claim hereinbefore, **characterized in that** it comprises a control system (27) equipped with inertial sensors and height detectors configured to manage the movement of the wing surfaces (15) and for the active control of the motions of the vessel in the two main conditions of use, namely when maneuvering by exploiting the increase or reduction of immersed volume of said floating elements (17a, 17b, 17c), and in flight at cruising speed by varying the lift of said wing surfaces (15).

11. Hull as in any claim hereinbefore, **characterized in that** said one or more uprights (14) are telescopic.

## Patentansprüche

1. Rumpf mit variabler Geometrie für ein Schiff (11), umfassend ein oder mehrere vollständig eingetauchte Teile (12), die konfiguriert sind, um einen Teil des Auftriebsschubs bereitzustellen und mittels einer oder mehrerer Ständer (14) mit einem hervorstehenden Teil (13) des Rumpfs verbunden sind, und wobei eine oder mehrere eingetauchte Flügelflächen (15), die in einer Situation, in der das Schiff mit einer ausreichend hohen Geschwindigkeit fährt, konfiguriert sind, um den verbleibenden Teil des vertikalen Schubs bereitzustellen, der erforderlich ist, um das Schiff (11) in einer vorbestimmten Höhe über der Wasseroberfläche zu halten, wobei der Rumpf eine oder mehrere Halterungen (16a, 16b, 16c) umfasst, die mit den Flügelflächen (15) verbunden sind und mit schwimmenden Elementen (17a, 17b, 17c) assoziiert sind, die in Bezug auf den vollständig eingetauchten Teil (12) bewegbar sind, wobei die schwimmenden Elemente (17a, 17b, 17c) an den Halterungen (16a, 16b, 16c) befestigt oder in Bezug auf die Halterungen (16a, 16b, 16c) bewegbar sind, wobei die schwimmenden Elemente (17a, 17b, 17c) somit im Wesentlichen mit dem vollständig eingetauchten Teil (12) und mit den Flügelflächen (15) zusammenwirken, wobei die schwimmenden Elemente (17a, 17b, 17c) über die Flügelflächen (15) mit dem vollständig eingetauchten Teil (12) verbunden sind, die Flügelflächen (15) konfiguriert sind, um sich in Bezug auf den vollständig eingetauchten Teil (12) zu bewegen oder in Bezug auf diesen feststehend zu bleiben, und wobei die schwimmenden Elemente (17a, 17b, 17c) konfiguriert sind, um ihr Eintauchen mit abnehmender Geschwindigkeit des Schiffs zu erhöhen, und daher den vertikalen Schub bereitzustellen, um den Abstand des Schiffs von dem Wasser auf eine Weise aufrechtzuerhalten oder einzustellen, die für die Nutzung des Schiffs auch bei reduzierten Geschwindigkeiten oder bei Stillstand des Schiffs optimal und funktionell ist.

2. Rumpf nach Anspruch 1, **dadurch gekennzeichnet, dass** es weitere Flügelflächen (36) umfasst, die fest oder bewegbar sind, unabhängig von den Flügelflächen (15), und die dazu beitragen, die Trimmung des Rumpfs des Schiffs im Flug zu steuern.

3. Rumpf nach Anspruch 1 oder 2, **dadurch gekennzeichnet, dass** die Flügelflächen (15) mittels Scharnieren (30) und Dreheinrichtungen (31), die konfiguriert sind, um es den Flügelflächen (15) zu ermöglichen, sich um die Scharniere (30) mit einer Bewegung zu drehen, die sie von dem Rumpf weg oder zu ihm hin führt, mit dem vollständig eingetauchten Teil (12) verbunden sind.

4. Rumpf nach einem vorherigen Anspruch, **dadurch gekennzeichnet, dass** die schwimmenden Elemente (17b) mit einer oder mehreren Halterungen (16b) verbunden sind, die die Form von einem oder mehreren Kabeln aufweisen, die innerhalb und außerhalb des einen oder der mehreren Ständer (14) positioniert sind, wobei das eine oder die mehreren Kabel, der eine oder die mehreren Ständer (14) und der Rumpf im Wesentlichen eine Zugstruktur bilden, die die strukturellen Spannungen auf den einen oder die mehreren Ständer (14) reduziert.

5. Rumpf nach einem der vorherigen Ansprüche 1 bis 3, **dadurch gekennzeichnet, dass** die schwimmenden Elemente (17c) entlang starrer Halterungen (16c) bewegbar sind, die außerhalb des einen oder der mehreren Ständer (14) positioniert sind.

6. Rumpf nach einem vorherigen Anspruch, **dadurch gekennzeichnet, dass** es ein Antriebssystem (18) umfasst, das in Bezug auf die Fahrtrichtung (XI) des Schiffs frontal ist.

7. Rumpf nach einem vorherigen Anspruch, **dadurch gekennzeichnet, dass** er ein System (19) zum Zuführen von Druckluft auf die Außenfläche des vollständig eingetauchten Teils (12) umfasst.

8. Rumpf nach einem vorherigen Anspruch, **dadurch gekennzeichnet, dass** er Räder (25) umfasst, die im Inneren der schwimmenden Elemente (17c) angeordnet und bei Bedarf abnehmbar sind, um den Rumpf an Land bewegbar zu machen.

9. Rumpf nach einem vorherigen Anspruch, **dadurch gekennzeichnet, dass** der vollständig eingetauchte Teil (12) ein torpedoförmiges Volumen ist, das die Funktion eines Tanks für den Kraftstoff des Schiffs und/oder für Batterien und/oder Brennstoffzellen aufweist.

10. Rumpf nach einem vorherigen Anspruch, **dadurch gekennzeichnet, dass** es ein Steuersystem (27) umfasst, das mit Trägheitssensoren und Höhendetektoren ausgestattet ist, die konfiguriert sind, um die Bewegung der Flügelflächen (15) und die aktive Steuerung der Bewegungen des Schiffs in den zwei Hauptgebrauchszuständen zu steuern, nämlich beim Manövrieren durch Nutzung der Vergrößerung oder Verkleinerung des eingetauchten Volumens der schwimmenden Elemente (17a, 17b, 17c) und im Flug bei Fahrgeschwindigkeit durch Veränderung des Auftriebs der Flügelflächen (15).

11. Rumpf nach einem vorherigen Anspruch, **dadurch gekennzeichnet, dass** der eine oder die mehreren Ständer (14) teleskopisch sind.

## Revendications

1. Coque à géométrie variable pour un navire (11), comprenant une ou plusieurs parties entièrement immergées (12), qui sont configurées pour fournir une partie de la poussée de flottabilité et sont solidaires d'une partie émergée (13) de la coque au moyen d'un ou plusieurs montants (14), et une ou plusieurs surfaces d'aile immergées (15), qui, dans une situation où le navire se déplace à une vitesse suffisamment élevée, sont configurées pour fournir la partie restante de la poussée verticale nécessaire pour maintenir le navire (11) au-dessus de la surface de l'eau à une hauteur prédéterminée, dans laquelle la coque comprend un ou plusieurs supports (16a, 16b, 16c) reliés aux surfaces d'aile (15) et associés à des éléments flottants (17a, 17b, 17c) qui sont mobiles par rapport à ladite partie entièrement immergée (12), lesdits éléments flottants (17a, 17b, 17c) étant fixés auxdits supports (16a, 16b, 16c) ou mobiles par rapport auxdits supports (16a, 16b, 16c), lesdits éléments flottants (17a, 17b, 17c) coopérant ainsi sensiblement avec ladite partie entièrement immergée (12) et avec lesdites surfaces d'aile (15), lesdits éléments flottants (17a, 17b, 17c) étant reliés à ladite partie entièrement immergée (12) par l'intermédiaire desdites surfaces d'aile (15), lesdites surfaces d'aile (15) étant configurées pour se déplacer par rapport à ladite partie entièrement immergée (12) ou pour rester fixes par rapport à celle-ci et lesdits éléments flottants (17a, 17b, 17c) étant configurés pour accroître leur immersion lorsque la vitesse du navire diminue, et donc fournir la poussée verticale pour maintenir ou ajuster la distance du navire par rapport à l'eau d'une manière qui est optimale et fonctionnelle pour l'utilisation du navire même à des vitesses réduites ou lorsque le navire est à l'arrêt.

2. Coque selon la revendication 1, **caractérisée en ce qu'**elle comprend d'autres surfaces d'aile (36), fixes ou mobiles, indépendantes desdites surfaces d'aile (15) et qui participent à la commande de l'assiette de la coque du navire en vol.

3. Coque selon la revendication 1 ou 2, **caractérisée en ce que** lesdites surfaces d'aile (15) sont reliées à ladite partie entièrement immergée (12) au moyen de charnières (30) et de moyens de rotation (31) configurés pour permettre auxdites surfaces d'aile (15) de tourner autour desdites charnières (30) avec un mouvement qui les éloigne ou les rapproche de ladite coque.

4. Coque selon une quelconque revendication précédente, **caractérisée en ce que** lesdits éléments flottants (17b) sont associés à un ou plusieurs supports (16b) qui ont la forme d'un ou plusieurs câbles positionnés à l'intérieur et à l'extérieur desdits un ou plusieurs montants (14), lesdits un ou plusieurs câbles, lesdits un ou plusieurs montants (14) et ladite coque constituant sensiblement une structure résistant à la traction qui réduit les contraintes structurelles sur lesdits un ou plusieurs montants (14).

5. Coque selon l'une quelconque des revendications 1 à 3 précédentes, **caractérisée en ce que** lesdits éléments flottants (17c) sont mobiles le long de supports rigides (16c) positionnés à l'extérieur desdits un ou plusieurs montants (14).

6. Coque selon une quelconque revendication précédente, **caractérisée en ce qu'**elle comprend un système de propulsion (18) qui est frontal par rapport à la direction (XI) de déplacement du navire.

7. Coque selon une quelconque revendication précédente, **caractérisée en ce qu'**elle comprend un système (19) pour distribuer de l'air comprimé sur la surface externe de la partie entièrement immergée (12).

8. Coque selon une quelconque revendication précédente, **caractérisée en ce qu'**elle comprend des roues (25) positionnées à l'intérieur desdits éléments flottants (17c) et amovibles, si besoin, afin de rendre la coque mobile sur le terre ferme.

9. Coque selon une quelconque revendication précédente, **caractérisée en ce que** la partie entièrement immergée (12) est un volume en forme de torpille ayant la fonction d'un réservoir pour le carburant du navire et/ou pour des batteries et/ou des piles à combustible.

10. Coque selon une quelconque revendication précédente, **caractérisée en ce qu'**elle comprend un système de commande (27) équipé de capteurs inertiels et de détecteurs de hauteur configurés pour gérer le mouvement des surfaces d'aile (15) et pour la commande active des mouvements du navire dans les deux principales conditions d'utilisation, à savoir lors de la manœuvre en exploitant l'augmentation ou la réduction du volume immergé desdits éléments flottants (17a, 17b, 17c), et en vol à la vitesse de croisière en faisant varier la portance desdites surfaces d'aile (15).

11. Coque selon une quelconque revendication précédente, **caractérisée en ce que** lesdits un ou plusieurs montants (14) sont télescopiques.
